# EUROPEAN PATENT SPECIFICATION

(11) **EP 3 613 927 B1**
(45) Date of publication and mention of the grant of the patent: **26.05.2021**
(21) Application number: 19184351.5
(22) Date of filing: 04.07.2019
(51) Int. Cl.: E04H 12/20, F03D 13/20

(54) **ATTACHMENT MEMBER, TOWER ARRANGEMENT AND METHOD FOR OBTAINING A TOWER ARRANGEMENT**
BEFESTIGUNGSELEMENT, TURMANORDNUNG UND VERFAHREN ZUR HERSTELLUNG EINER TURMANORDNUNG
ÉLÉMENT DE FIXATION, AGENCEMENT DE TOUR ET PROCÉDÉ D'OBTENTION D'UN AGENCEMENT DE TOUR

(30) Priority: 22.08.2018 FI 20185693
(43) Date of publication of application: 26.02.2020
(73) Proprietor: Peikko Group Oy, 15170 Lahti (FI)
(72) Inventor: Tuominen, Kari, 15170 Lahti (FI)
(74) Representative: Boco IP Oy Ab

(56) References cited:
- JP-A- H08 189 032
- JP-A- 2018 119 324
- US-A1- 2015 152 619

## Description

### FIELD OF THE DISCLOSURE

The disclosure relates to towers supported by stay cables, and particularly to an attachment member for attaching a stay cable of a tower to a foundation. The present disclosure further concerns a tower arrangement and a method for obtaining a tower arrangement.

### BACKGROUND OF THE DISCLOSURE

In order to obtain higher towers for example for wind turbines, cable stayed towers can be used. A problem with using stay cables in wind towers is that the load caused to the cables and anchors is highly fatiguing. The high strength anchor bolts used for connecting the stay cable to the foundation must therefore be handled very carefully in order not to affect their fatigue capacity.

### BRIEF DESCRIPTION OF THE DISCLOSURE

An object of the present disclosure is to provide an attachment member, a tower arrangement and a method for obtaining a tower arrangement so as to solve the above problem.

The object of the disclosure is achieved by an attachment member, tower arrangement and a method for obtaining a tower arrangement which are characterized by what is stated in the independent claims. The preferred embodiments of the disclosure are disclosed in the dependent claims.

The disclosure is based on the idea of providing the anchor bolt connecting the stay cable to the foundation with a metal casing having a closed structure.

An advantage of the attachment member, the tower arrangement and the method of the disclosure is that the metal casing gives protection to the anchor bolt against damages JP 2018 119324 A discloses an attachment member for attaching a stay cable, the attachment member comprising the technical features of the preamble of claim 1.

### BRIEF DESCRIPTION OF THE DRAWINGS

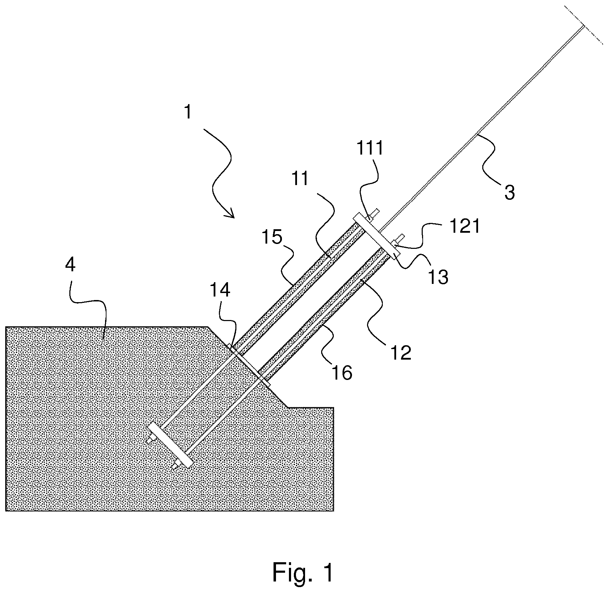

In the following the disclosure will be described in greater detail by means of preferred embodiments with reference to the accompanying drawings, in which
Figure 1 is a schematic drawing of an attachment member according to an embodiment of the disclosure;

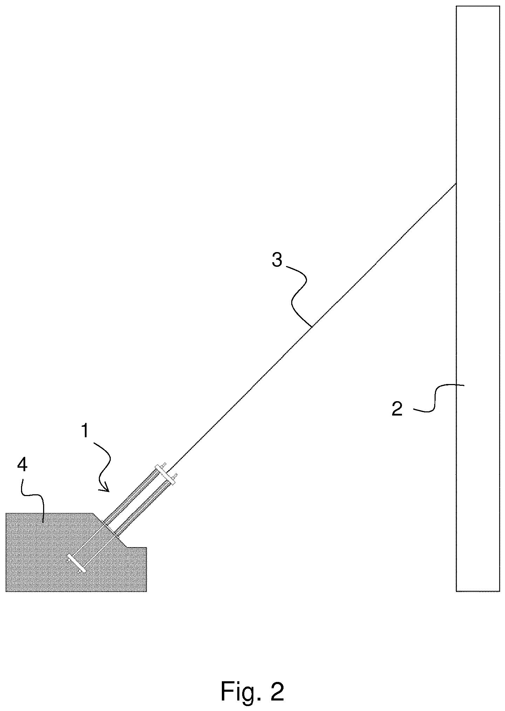

Figure 2 is a schematic drawing of a tower arrangement according to an embodiment of the disclosure.

### DETAILED DESCRIPTION OF THE DISCLOSURE

### Attachment member

The disclosure relates to an attachment member 1 for attaching a stay cable 3 of a tower 2 to a foundation 4 for the stay cable 3. For example, the tower 2 is a windmill tower. Preferably, the foundation 4 is a reinforced concrete foundation.

The attachment member 1 comprises a first anchor bolt 11. The first anchor bolt 11 is arranged to be attached to the foundation 4. Preferably, the first anchor bolt 11 is arranged to be cast partially in concrete.

The attachment member 1 comprises an adapter plate 13 arranged at one end of the first anchor bolt 11 so that the first anchor bolt 11 penetrates the adapter plate 13. The stay cable 3 is arranged to be attached to the adapter plate 13.

The stay cable 3 can be pre-tensioned using the first anchor bolt 11 and a first tensioning means 111 attached thereto. The first tensioning means 111 is arranged to exert compressive force against the adapter plate 13 in a direction of the foundation 4. For example, the first tensioning means 111 comprises a nut.

The attachment member 1 comprises an end plate 14 arranged so that the first anchor bolt 11 penetrates the end plate 14. The end plate 14 is arranged to come in contact with the foundation 4. In other words, the end plate 14 is arranged to rest against the foundation 4.

The attachment member 1 comprises a first metal casing 15 arranged around the first anchor bolt 11 between the adapter plate 13 and the end plate 14 for protecting the first anchor bolt 11 against damages. The first metal casing 15 has a closed structure and is arranged to transmit compressive force from the adapter plate 13 to the end plate 14. According to an embodiment, the first metal casing 15 comprises an opening for filling the first metal casing 15 with concrete. Preferably, the first metal casing 15 has a tubular shape and the opening is arranged at an end of the tubular shape. The adapter plate 13 and the end plate 14 are arranged to seal the ends of the first metal casing, and thus close the opening. An advantage of filling the first metal casing with concrete is that concrete can take high compressive force and it gives good corrosion protection to the bolt.

According to an embodiment, the attachment member 1 comprises at least one further anchor bolt 12 arranged to be attached to the foundation 4. The adapter plate 13 is arranged at one end of the at least one further anchor bolt 12 so that the at least one further anchor bolt 12 penetrates the adapter plate 13. The at least one further anchor bolt 12 penetrates the end plate 14. In this case, the stay cable 3 can be pre-tensioned using the first anchor bolt 11, the first tensioning means 111, the at least one further anchor bolt 12 and a second tensioning means 121 attached thereto. For example, the second tensioning means 121 comprises a nut. The attachment member 1 comprises a second metal casing 16 arranged around the at least one further anchor bolt 12 between the adapter plate 13 and the end plate 14 for protecting the at least one further anchor bolt 12 against damages. The second metal casing 16 being arranged to transmit compressive force from the adapter plate 13 to the end plate 14. According to an embodiment, the second metal casing 16 comprises an opening for filling the second metal casing 16 with concrete. The structure and technical effects of the second metal casing 16 corresponds to the structure and technical effects of the first metal casing 15.

### Tower arrangement

The disclosure relates also to a tower arrangement. The tower arrangement comprises a tower 2. For example, the tower is a windmill tower.

The tower arrangement comprises a stay cable 3 attached from one end to the tower 2. Normally, the tower arrangement comprises at least three stay cables 3 arranged to extend in different directions from the tower 2.

The tower arrangement comprises a foundation 4 for the stay cable 3 attached to the ground. Preferably, the foundation 4 is a reinforced concrete foundation.

The tower arrangement comprises an attachment member 1 as described above.

The stay cable 3 is attached from a second end to the adapter plate 13.

The first anchor bolt 11 is attached to the foundation 4. For example, the first anchor bolt 11 is attached to the foundation 4 by casting the first anchor bolt 11 partially inside the foundation. The first anchor bolt 11 is pre-tensioned using the first tensioning means 111.

According to an embodiment, the first metal casing 15 of the attachment member 1 is filled with concrete.

According to an embodiment, the attachment member 1 comprises at least one further anchor bolt 12 attached to the foundation 4 and pre-tensioned.

### Method

The disclosure relates also to a method for obtaining a tower arrangement.

The method comprises a first providing step for providing a tower 2. For example, the tower is a windmill tower.

The method comprises a second providing step for providing a foundation 4 for a stay cable 3 of the tower 2. For example, the second providing step comprises casting the foundation 4 from concrete.

The method comprises a first attaching step for attaching a first anchor bolt 11 to the foundation 4. Preferably, the first anchor bolt 11 is partially cast in the concrete of the foundation 4.

The method comprises a third providing step for providing an end plate 14 arranged in contact with the foundation 4 so that the first anchor bolt 11 penetrates the end plate 14. The end plate 14 can be provided penetrated by the first anchor bolt 11 either before the first attaching step or after the first attaching step.

The method comprises a fourth providing step for providing a first metal casing 15 around the first anchor bolt 11 so that the first metal casing 15 is in contact with the end plate 14. The first metal casing 15 can be provided after the first attaching step. Preferably, the first metal casing 15 is provided around the first anchor bolt 11 before the first attaching step so that the first metal casing 15 provides protection to the first anchor bolt 11 even during transportation and installation of the first anchor bolt 11.

The method comprises a fifth providing step for providing an adapter plate 13 at an end of the first anchor bolt 11 so that the first anchor bolt 11 penetrates the adapter plate 13.

The method comprises a second attaching step for attaching the stay cable 3 of the tower 2 to the adapter plate 13.

The method comprises a pre-tensioning step for pre-tensioning the first anchor bolt 11 against the foundation 4. The pre-tensioning step is performed using the first tensioning means 111.

The first metal casing 15 has a closed structure and is arranged to transmit compressive force from the adapter plate 13 to the end plate 14.

According to an embodiment, the method comprises a filling step for filling the first metal casing 15 with concrete.

## Claims

1. An attachment member (1) for attaching a stay cable (3) of a tower (2) to a foundation (4) for the stay cable (3), the attachment member (1) comprising
- a first anchor bolt (11) arranged to be attached to the foundation (4); and
- an adapter plate (13) arranged at one end of the first anchor bolt (11) so that the first anchor bolt (11) penetrates the adapter plate (13), wherein the stay cable (3) is arranged to be attached to the adapter plate (13);
wherein the stay cable (3) can be pre-tensioned using the first anchor bolt (11) and a first tensioning means (111) attached thereto,
wherein the attachment member (1) comprises an end plate (14) arranged so that the first anchor bolt (11) penetrates the end plate (14), the end plate (14) being arranged to come in contact with the foundation (4); and
the attachment member (1) comprising a first metal casing (15) arranged around the first anchor bolt (11), **characterized in that** the first metal casing (15) is arranged between the adapter plate (13) and the end plate (14) for protecting the first anchor bolt against damages, the first metal casing (15) having a closed structure and being arranged to transmit compressive force from the adapter plate (13) to the end plate (14).

2. An attachment member (1) according to claim 1, **characterized in that** the first metal casing (15) comprises an opening for filling the first metal casing (15) with concrete.

3. An attachment member (1) according to claim 1 or 2, **characterized in that** the attachment member (1) comprises at least one further anchor bolt (12) arranged to be attached to the foundation (4);
the adapter plate (13) is arranged at one end of the at least one further anchor bolt (12) so that the at least one further anchor bolt (12) penetrates the adapter plate (13);
the at least one further anchor bolt (12) penetrates the end plate (14); and
the attachment member (1) comprises a second metal casing (16) arranged around the at least one further anchor bolt (12) between the adapter plate (13) and the end plate (14), the second metal casing (16) being arranged to transmit compressive force from the adapter plate (13) to the end plate (14).

4. An attachment member (1) according to claim 3, **characterized in that** the second metal casing (16) comprises an opening for filling the second metal casing (16) with concrete.

5. A tower arrangement comprising
- a tower (2);
- a stay cable (3) attached from one end to the tower (2);
- a foundation (4) for the stay cable (3) attached to the ground; and
- an attachment member (1) according to any one of the preceding claims, wherein
the stay cable (3) is attached from a second end to the adapter plate (13), and
the first anchor bolt (11) is attached to the foundation (4) and pre-tensioned.

6. A tower arrangement according to claim 5, **characterized in that** the first metal casing (15) of the attachment member (1) is filled with concrete.

7. A method for obtaining a tower arrangement, comprising
- a first providing step for providing a tower (2);
- a second providing step for providing a foundation (4) for a stay cable (3) of the tower (2);
- a first attaching step for attaching a first anchor bolt (11) to the foundation (4);
- a third providing step for providing an end plate (14) arranged in contact with the foundation (4) so that the first anchor bolt (11) penetrates the end plate (14);
- a fourth providing step for providing a first metal casing (15) around the first anchor bolt (11) so that the first metal casing (15) is in contact with the end plate (14);
- a fifth providing step for providing an adapter plate (13) at an end of the first anchor bolt (11) so that the first anchor bolt (11) penetrates the adapter plate (13);
- a second attaching step for attaching the stay cable (3) of the tower (2) to the adapter plate (13); and
- a pre-tensioning step for pre-tensioning the first anchor bolt (11) against the foundation (4),
wherein the first metal casing (15) has a closed structure and is arranged to transmit compressive force from the adapter plate (13) to the end plate (14).

8. A method according to claim 7, **characterized in that** the method comprises a filling step for filling the first metal casing (15) with concrete.

## Patentansprüche

1. Befestigungselement (1) zum Anbringen eines Schrägseils (3) eines Turms (2) an einem Fundament (4) für das Schrägseil (3), wobei das Befestigungselement (1) umfasst:
- eine erste Ankerschraube (11), die dazu eingerichtet ist, am Fundament (4) angebracht zu werden; und
- eine Adapterplatte (13), die an einem Ende der ersten Ankerschraube (11) so eingerichtet ist, dass die erste Ankerschraube (11) die Adapterplatte (13) durchdringt, wobei das Schrägseil (3) dazu eingerichtet ist, an der Adapterplatte (13) angebracht zu werden;
wobei das Schrägseil (3) mit Hilfe der ersten Ankerschraube (11) und eines an ihr angebrachten Spannmittels (111) vorgespannt werden kann,
wobei
das Befestigungselement (1) eine Endplatte (14) umfasst, die so eingerichtet ist, dass die erste Ankerschraube (11) die Endplatte (14) durchdringt, wobei die Endplatte (14) so eingerichtet ist, dass sie mit dem Fundament (4) in Kontakt kommt; und
das Befestigungselement (1) ein erstes Metallgehäuse (15) umfasst, das rund um die erste Ankerschraube (11) eingerichtet ist, **dadurch gekennzeichnet, dass** das erste Metallgehäuse (15) zwischen der Adapterplatte (13) und der Endplatte (14) eingerichtet ist, um die erste Ankerschraube vor Beschädigungen zu schützen, wobei das erste Metallgehäuse (15) eine geschlossene Struktur aufweist und dazu eingerichtet ist, eine Druckkraft von der Adapterplatte (13) auf die Endplatte (14) zu übertragen.

2. Befestigungselement (1) nach Anspruch 1, **dadurch gekennzeichnet, dass** das erste Metallgehäuse (15) eine Öffnung zum Befüllen des ersten Metallgehäuses (15) mit Beton umfasst.

3. Befestigungselement (1) nach Anspruch 1 oder 2, **dadurch gekennzeichnet, dass** das Befestigungselement (1) mindestens eine weitere für die Anbringung am Fundament (4) eingerichtete Ankerschraube (12) umfasst;
die Adapterplatte (13) an einem Ende der mindestens einen weiteren Ankerschraube (12) eingerichtet ist, so dass die mindestens eine weitere Ankerschraube (12) die Adapterplatte (13) durchdringt;
die mindestens eine weitere Ankerschraube (12) die Endplatte (14) durchdringt; und
das Befestigungselement (1) ein zweites Metallgehäuse (16) umfasst, das rund um die mindestens eine weitere Ankerschraube (12) zwischen der Adapterplatte (13) und der Endplatte (14) eingerichtet ist, wobei das zweite Metallgehäuse (16) dazu eingerichtet ist, eine Druckkraft von der Adapterplatte (13) auf die Endplatte (14) zu übertragen.

4. Befestigungselement (1) nach Anspruch 3, **dadurch gekennzeichnet, dass** das zweite Metallgehäuse (16) eine Öffnung zum Befüllen des zweiten Metallgehäuses (16) mit Beton umfasst.

5. Turmanordnung umfassend:
- einen Turm (2);
- ein Schrägseil (3), das mit einem Ende am Turm (2) befestigt ist;
- ein Fundament (4) für das am Boden befestigte Schrägseil (3); und
- ein Befestigungselement (1) nach einem der vorhergehenden Ansprüche, wobei
das Schrägseil (3) mit einem zweiten Ende an der Adapterplatte (13) befestigt ist, und
die erste Ankerschraube (11) am Fundament (4) befestigt und vorgespannt ist.

6. Turmanordnung nach Anspruch 5, **dadurch gekennzeichnet, dass** das erste Metallgehäuse (15) des Befestigungselements (1) mit Beton gefüllt ist.

7. Verfahren zum Herstellen einer Turmanordnung, umfassend:
- einen ersten Bereitstellungsschritt zum Bereitstellen eines Turms (2);
- einen zweiten Bereitstellungsschritt zum Bereitstellen eines Fundaments (4) für ein Schrägseil (3) des Turms (2);
- einen ersten Befestigungsschritt zum Befestigen einer ersten Ankerschraube (11) am Fundament (4);
- einen dritten Bereitstellungsschritt zum Bereitstellen einer Endplatte (14), die im Kontakt mit dem Fundament (4) so eingerichtet wird, dass die erste Ankerschraube (11) die Endplatte (14) durchdringt;
- einen vierten Bereitstellungsschritt zum Bereitstellen eines ersten Metallgehäuses (15) rund um die erste Ankerschraube (11) dergestalt, dass das erste Metallgehäuse (15) in Kontakt mit der Endplatte (14) ist;
- einen fünften Bereitstellungsschritt zum Bereitstellen einer Adapterplatte (13) an einem Ende der ersten Ankerschraube (11) dergestalt, dass die erste Ankerschraube (11) die Adapterplatte (13) durchdringt;
- einen zweiten Befestigungsschritt zum Befestigen des Schrägseils (3) des Turms (2) an der Adapterplatte (13); und
- einen Vorspannungsschritt zum Vorspannen der ersten Ankerschraube (11) gegen das Fundament (4),
wobei das erste Metallgehäuse (15) eine geschlossene Struktur aufweist und dazu eingerichtet ist, eine Druckkraft von der Adapterplatte (13) auf die Endplatte (14) zu übertragen.

8. Verfahren nach Anspruch 7, **dadurch gekennzeichnet, dass** das Verfahren einen Befüllschritt zum Befüllen des ersten Metallgehäuses (15) mit Beton umfasst.

## Revendications

1. Élément de fixation (1) pour attacher un hauban (3) d'une tour (2) à une fondation (4) pour le hauban (3), ledit élément de fixation (1) comprenant
- un premier boulon d'ancrage (11) aménagé pour être attaché à la fondation (4); et
- une plaque d'adaptation (13) aménagée à une extrémité du premier boulon d'ancrage (11) de telle façon que le premier boulon d'ancrage (11) pénètre la plaque d'adaptation (13), ledit hauban (3) étant aménagé pour être attaché à la plaque d'adaptation (13);
ledit hauban (3) pouvant être pré-tendu à l'aide du premier boulon d'ancrage (11) et d'un moyen tendeur (111) y attaché,
dans lequel
l'élément de fixation (1) comprend une plaque terminale (14) aménagée de telle façon que le premier boulon d'ancrage (11) pénètre la plaque terminale (14), ladite plaque terminale (14) étant aménagée pour entrer en contact avec la fondation (4); et
ledit élément de fixation (1) comprenant un premier boîtier métallique (15) aménagé autour du premier boulon d'ancrage (11), **caractérisé en ce que** le premier boîtier métallique (15) est aménagé entre la plaque d'adaptation (13) et la plaque terminale (14) pour protéger le premier boulon d'ancrage contre les dégradations, ledit premier boîtier métallique (15) présentant une structure fermée et étant aménagé pour transmettre une force de compression de la plaque d'adaptation (13) à la plaque terminale (14).

2. Élément de fixation (1) selon la revendication 1, **caractérisé en ce que** le premier boîtier métallique (15) comprend une ouverture pour le remplissage de béton du premier boîtier métallique (15).

3. Élément de fixation (1) selon la revendication 1 ou 2, **caractérisé en ce que** l'élément de fixation (1) comprend au moins un boulon d'ancrage supplémentaire (12) aménagé pour être attaché à la fondation (4);
la plaque d'adaptation (13) est aménagée à une extrémité dudit au moins un boulon d'ancrage supplémentaire (12) de telle façon que ledit au moins un boulon d'ancrage supplémentaire (12) pénètre la plaque d'adaptation (13);
ledit au moins un boulon d'ancrage supplémentaire (12) pénètre la plaque terminale (14); et
l'élément de fixation (1) comprend un deuxième boîtier métallique (16) aménagé autour dudit au moins un boulon d'ancrage supplémentaire (12) entre la plaque d'adaptation (13) et la plaque terminale (14), ledit deuxième boîtier métallique (16) étant aménagé pour transmettre une force de compression de la plaque d'adaptation (13) à la plaque terminale (14).

4. Élément de fixation (1) selon la revendication 3, **caractérisé en ce que** le deuxième boîtier métallique (16) comprend une ouverture pour le remplissage de béton du deuxième boîtier métallique (16).

5. Agencement de tour comprenant :
- une tour (2);
- un hauban (3) attaché par une extrémité à la tour (2);
- une fondation (4) pour le hauban (3) attaché au sol; et
- un élément de fixation (1) selon l'une des revendications précédentes,
dans lequel
le hauban (3) est attaché par une deuxième extrémité à la plaque d'adaptation (13), et
le premier boulon d'ancrage (11) est attaché à la fondation (4) et pré-tendu.

6. Agencement de tour selon la revendication 5, **caractérisé en ce que** le premier boîtier métallique (15) de l'élément de fixation (1) est rempli de béton.

7. Procédé d'obtention d'un agencement de tour, comprenant
- une première étape de fourniture pour fournir une tour (2);
- une deuxième étape de fourniture pour fournir une fondation (4) pour un hauban (3) de la tour (2);
- une première étape de fixation pour attacher un premier boulon d'ancrage (11) à la fondation (4);
- une troisième étape de fourniture pour fournir une plaque terminale (14) aménagée en contact avec la fondation (4) de telle façon que le premier boulon d'ancrage (11) pénètre la plaque terminale (14);
- une quatrième étape de fourniture pour fournir un premier boîtier métallique (15) autour du premier boulon d'ancrage (11) de telle façon que le premier boîtier métallique (15) soit en contact avec la plaque terminale (14);
- une cinquième étape de fourniture pour fournir une plaque d'adaptation (13) à une extrémité du premier boulon d'ancrage (11) de telle façon que le premier boulon d'ancrage (11) pénètre la plaque d'adaptation (13);
- une deuxième étape de fixation pour attacher le hauban (3) de la tour (2) à la plaque d'adaptation (13); et
- une étape de mise en pré-tension pour pré-tendre le premier boulon d'ancrage (11) contre la fondation (4),
ledit premier boîtier métallique (15) présentant une structure fermée et étant aménagé pour transmettre une force de compression de la plaque d'adaptation (13) à la plaque terminale (14).

8. Procédé selon la revendication 7, **caractérisé en ce que** le procédé comprend une étape de remplissage pour remplir de béton le premier boîtier métallique (15).
